# EUROPEAN PATENT SPECIFICATION

(11) **EP 2 070 724 B1**
(45) Date of publication and mention of the grant of the patent: **05.05.2010**
(21) Application number: 09155773.6
(22) Date of filing: 14.12.2006
(51) Int. Cl.: B44D 3/12, B65D 43/02, B65D 45/34

(54) **Improvement to packaging comprising a container associated with a lid equipped with reversible and reusable locking means**
Verbesserte Verpackung aus einem mit einem Deckel verbundenen Behälter mit umdrehbaren und wiederverwendbaren Schließvorrichtungen
Amélioration de conditionnement comprenant un conteneur associé à un couvercle équipé de moyens de verrouillage réversibles et réutilisables

(43) Date of publication of application: 17.06.2009
(62) Divisional of application: 06301254.6
(73) Proprietor: Impress Group B.V., 7418 AH Deventer (NL)
(72) Inventor: Dathy, Franck, 72100 Le Mans (FR)
(74) Representative: Michelet, Alain

(56) References cited:
- FR-A- 2 852 580

## Description

The present invention relates to a packaging comprising a container associated with a lid equipped with locking means of reversible and reusable type ; this packaging could receive all type of products, but is specifically adapted to liquid, semi-fluid or semi-pasty consistency substances, like varnishes, lacquers or paintings.

These type of products require specific packaging, in particular to take their particular consistency and toxicity into account.
Packagings in question are generally constituted of a container sealed by means of a lid equipped with locking means.

In practice, this type of packaging should not be open in an impromptu or inopportune way, but it must nevertheless be able to be easily open by the final user.

Document FR-A-2 852 580 discloses a packaging device from which the lid of the invention differs in particular by the swivelling features of the end part.

The applicant developed a new structure of packaging answering perfectly to these various criteria.
In accordance with the invention, the container of packaging comprises a metallic body, obtained particularly either by stamping or by cutting, welding and rolling operations of a metallic sheet, provided with a side wall whereof lower border is associated with a bottom and whereof upper border, which delimits the upper opening of said container, is finished by an upper edge. In addition, the lid of the packaging, made out of plastic, comprises a central closing panel prolonged by a peripheral border suitable to cap the upper edge of the container body during the closing of said container by the lid ; moreover, this lid comprises, on its periphery, at least two locking legs (also named flap or tab) each connected to said peripheral border via a one piece hinge whereof the articulation axis extends parallel or substantially parallel to said peripheral border, each said locking legs comprising at least a locking part suitable to cooperate in a removable way with an outer structure, called "complementary locking structure", arranged at the side of the upper border of said container body, when said locking leg is swivelled in a position named as "locked"; some at least of the locking legs also comprise a one piece lengthening forming a kind of handle facilitating, for an user, the swivelling operation of said locking legs, wherein said one piece lengthening comprises a principal part, located at the side of the locking part, continued by an end part by the intermediary of a one piece folding line, wherein said end part comprises, on the one hand, an opening shaped to allow the passage of the fingers of an user and its gripping, in particular to allow its swivelling compared to said principal part, and on the other hand, a one piece extension extending in direction of the peripheral border of the lid, suitable to come resting on the outside face in opposite of the side wall of the container during the swivelling operation of said end part, that particularly to form a kind of lever and so as to facilitate the swivelling of the locking leg from its locked position up to an unlocked position.

Such a packaging proves to be very easy to open and to close thanks to the use of its locking legs. These legs take part effectively in the opening and closing operations of the packaging by the final user.
This packaging is particularly interesting since the locking legs have a structure provided with a one piece lengthening shape to simplify its manual unlocking compared to the complementary locking structure of the container.

The corresponding locking legs are also interesting by the fact that the structure of their one piece lengthening can advantageously be shaped to form also a witness of opening or tamper evident closure.
In this case, before the first opening of the packaging, the principal part and the extension forming lever of the end part of the lengthening of the locking legs are advantageously bound via connections means which are degradable in an irreversible way, for example of the pre-cut line(s) type or of the junction point(s) type, suitable to be broken during the swivelling operation of said end part compared to said principal part, that to constitute a witness of opening or tamper evident closure.

Still in this case, the one piece extension comprises, at side of its lower face, a projecting structure suitable to reinforce this extension and to constitute the leaning part for the unlocking operation.

Moreover, always in an interesting way, the folding line extends transversely over the width of the one piece lengthening of the locking legs; and the end part of said lengthening comprises:
- the opening for the passage of the fingers, arranged at the side of the free external edge of said one piece lengthening, opposed to the articulation hinge of said locking leg ;
- advantageously a transversal wall, arranged to form a stop limiting the possibility of introduction of the fingers into said opening ; and
- an extension forming lever, extending in the space of the principal part, on a part of its length and in direction of the hinge of the corresponding locking leg.

Also according this case, the lateral borders of the locking legs is advantageously equipped with returns whereof the free longitudinal edge, intended to come next to the outside face of the side wall, fits said side wall in opposite, in order to limit the possibility of inserting a swinging tool.
The folding line extends also advantageously in parallel or substantially in parallel compared to the upper hinge.

Moreover, this packaging should also be the tightest as possible to avoid the flow of its contents when it is sealed ; in locked position, the packaging according to the invention has optimized sealing characteristics.

To this aim, the peripheral border of the lid central closing panel comprises advantageously a U reversed section, whereof the bottom is equipped with a seal, and wherein the locking part of the locking legs are suitable to cooperate in a removable way with the complementary locking structure during a swivelling operation of said locking leg in a "locked" position, the corresponding cooperation involving, simultaneously, a bringing nearer between said peripheral border of lid and said upper edge of container, to obtain the crushing of said seal.

Preferably, the upper face of the locking part and the lower face of the complementary locking structure have complementary or substantially complementary surfaces in curved general shape, suitable to cooperate one with the other during the swivelling operation of the locking legs in locked position,.

According to a characteristic of realization, the upper edge of the container consists in a roll, projecting towards outside, and the complementary locking structure of the container is formed by the lower part of said rolled edge.
In this case, the rolled edge comprises advantageously, successively, from the upper border of the associated side wall, at least the following parts:
- an upper part in shape of a roll, having a U section, open towards the lower border of the associated side wall, suitable to be capped by the peripheral border of the lid, and
- a lower part in shape of a roll whereof lower surface presents a section arranged in the general shape of half-circle or half-oval, forming the complementary locking structure and suitable to cooperate with the upper face of the locking part of the lid legs.

In an alternative way, the side wall of the body of container can comprise, at side of its upper border, a moulding projecting towards the outside and whereof the lower part is shaped to constitute the complementary locking structure of the container, suitable to cooperate with the locking part of the lid legs.

The invention will be also illustrated, without being limited, by the following description of several possible embodiments, given only as examples and showed on the following figures in which :
- figure 1 shows, in a schematic manner and in section, the upper part of a packaging according to the invention, composed of a body container and of a complementary closing lid whereof one of the locking legs is represented here in "unlocked" position ;
- figure 2 corresponds to the packaging of figure 1, now in closed configuration, with the locking leg of the lid represented in "locked" position ;
- figure 3 still corresponds to the packaging of figures 1 and 2, in which the locking leg is suitably moved by the final user to cause his unlocking compared to the associated container;
- figure 4 is a partial top view and in perspective, of a possible embodiment of the closing lid according to the invention, with one of its locking legs showed in unlocked position, before the installation on the container ;
- figure 5 is a lower view, in perspective, of the closing lid according to figure 4 ;
- figures 6, 7 and 8 show, each one, a possible alternative embodiment of the packaging according to the invention, constituted of a particular container associated with a lid whereof the structure is similar to the one showed on figures 1 to 3.

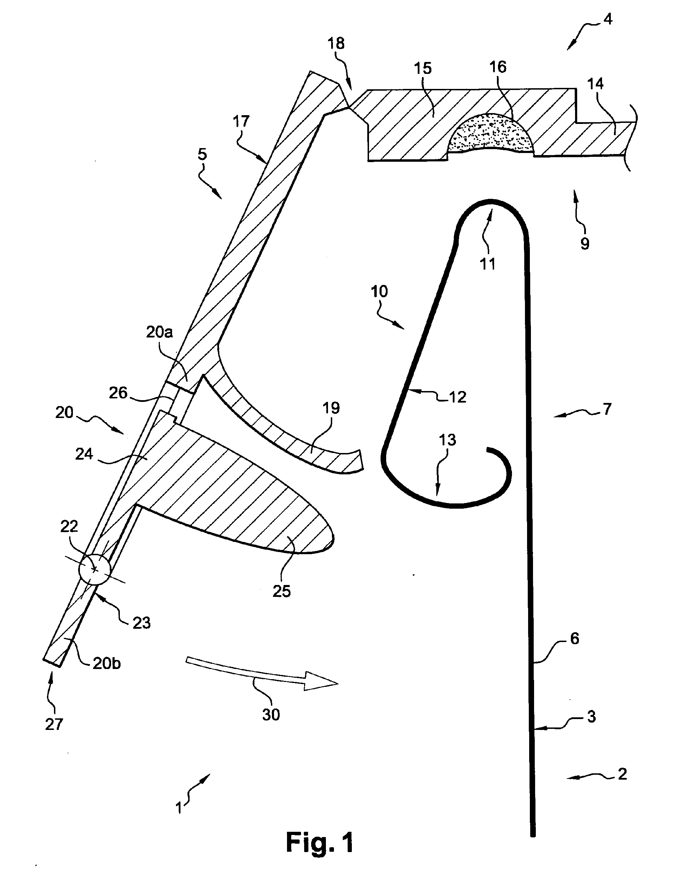

Packaging 1, partially illustrated in a schematic way on figures 1 to 3, is composed, on the one hand, of a container 2 comprising a metallic body 3 opened at its upper part, and on the other hand, of a closing lid 4 made out of plastic which is equipped on its circumference with reusable and reversible locking means, in the shape of plurality of articulated legs 5 (only one of these locking legs 5 is represented on these figures 1 to 3).

The container body 3, whereof only the left upper part is illustrated on the figures 1 to 3 (in an enlarged view), is carried out particularly by operations of cutting, welding, and rolling of a metallic sheet (made out of steel for example) whereof the thickness can be in the range of 0,15 to 0,40 mm.

This container body 3 is in general cylindrical or parallelepiped shape. It is composed of a side wall 6 whereof the lower border is associated with a bottom element (not represented), for example assembled and fixed by double seaming, and whereof the upper border 7, which delimits the upper opening 9, ends by a rolled edge 10 projecting towards outside and directed towards the lower edge (not represented) of the side wall 6.

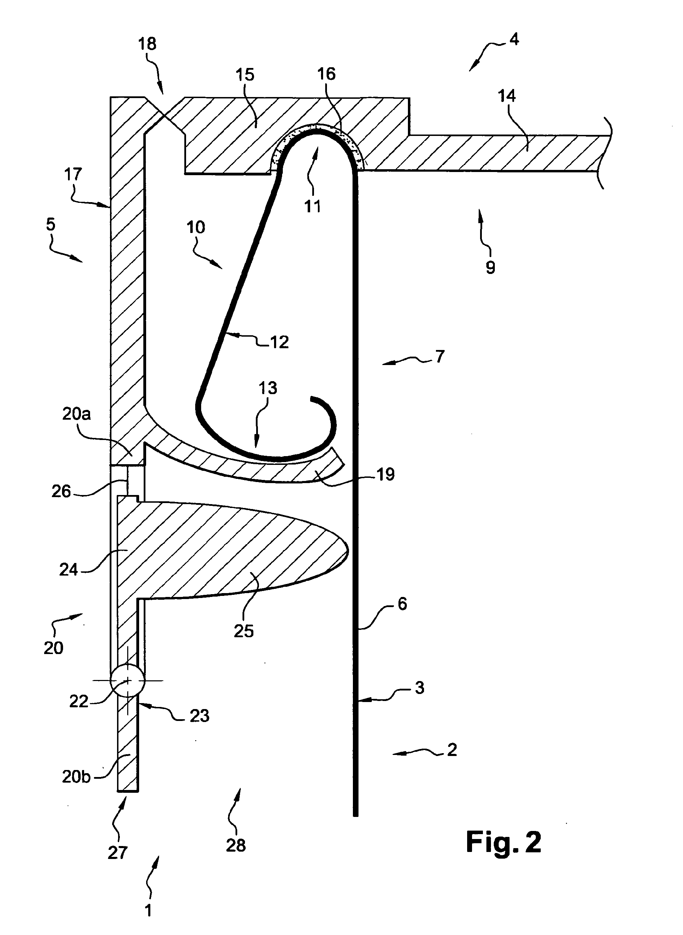

The rolled edge 10 is shaped to be suitable to cooperate with the locking legs 5 of the closing lid 4, that during an operation of said locking legs 5 in locked position (as it can be seen figure 2).

In this circumstance, this rolled edge 10 comprises successively, from the upper border 7 of the side wall 6 associated, the following parts :
- an upper rolled part 11 having a U reversed section, opened downwardly and in direction of the lower border (not represented) of the associated side wall 6,
- a connection part 12, moving away gradually from the side wall 6 in opposite, and
- a lower rolled part 13 having a section in general form of half-circle or half-oval, extending towards the side wall 6 in opposite and forming a complementary locking structure, in shape of a seat, suitable to cooperate with the locking legs 5 of the closing lid 4 when said locking legs 5 are operated in locked position (figure 2).

The closing lid 4, whereof only the left part is represented in a schematic view and in section, is made out by traditional operations of moulding-injection of a thermoplastic matter usually employed.

This lid 4 comprises a central closing panel 14 (cylindrical or polygonal) delimited by a peripheral border 15 whereof lower surface has a reversed U section suitable to come to cap the upper rolled part 11 of the rolled edge 10.
The bottom of this peripheral border 15 is equipped with a seal 16, suitable to be crushed between the upper part 11 of the rolled edge 10 and the peripheral border 15 of lid 4 to ensure the sealing of packaging 1 (figure 2).
This seal 16 can be assembled, made out of PVC foam, or it can be a solid added compound or seal which is sticked or forced into the border 15. It can also be made out in a one piece with the peripheral border 15, for example of the moulded fringes type.

This lid 4 comprises also, on its circumference, the locking legs 5 above-mentioned. The number and the localisation of these locking legs 5 are function of the container shape to close and of the size of the container ; in a general way, this number is comprised between two and ten.

As illustrated on figures 1 to 3, each locking leg 5 comprises a body 17 connected to the peripheral border 15 via a one piece hinge 18. This hinge 18 can consist in a simple thinning of matter, or can consist in a plurality of flexible tab ; its axis of articulation extends in parallel or substantially in parallel to the peripheral border 15 (in function of the circular or polygonal shape of the lid).

These locking legs 5 comprise mainly :
- a locking or gripping part 19, extending from the articulated body 17, whereof curved upper face is suitable to come to cooperate in a removable and reversible way with the locking complementary structure 13 of the rolled edge 10 (figure 2), and
- a one piece lengthening 20 of said articulated body 17, forming a kind of handle facilitating, for an user, the swivelling operation of the locking leg 5 equipped, between its locked and unlocked positions.

The corresponding locking leg 5 is particularly interesting by fact that the structure of its one piece lengthening 20 is shaped - to simplify its manual unlocking compared to the complementary locking structure 13 of container 2, and also - to form a witness of opening or tamper evident closure.

For this purpose, the lengthening 20 comprises two parts associated by a one piece hinge 22 : a principal part 20a, at the side of the locking part 19, and an end part 20b.
This hinge 22 extends transversely compared to the longitudinal axis of the locking leg 5, and it extends also in parallel or substantially in parallel compared to the upper hinge 18.

More precisely, the end part 20b comprises :
- an interior edge 23, at the side of the hinge 22, from which a one piece extension 24 extends, that in the space of the principal part 20a and on a portion of its length ; this extension 24 is provided on its lower face with a projecting structure 25, and it is joined with the principal part 20a by a one piece joining point 26, and
- a free external edge 27, formed to come in opposite and at distance to the side wall 6 of the container 2 when the locking leg 5 is operated in locked position (as described in relation to figure 2), to form and define an opening 28 adapted for the passage or the entrance of the fingers of an user and the gripping of said end part 20b.

In practice, as it can be seen figure 1, first of all, the closing of container 2 consists in bringing the closing lid 4 on its upper opening 9, in order that the upper part 11 of its upper edge 7 is capped by the peripheral complementary edge 15.
For this purpose, the locking legs 5 are advantageously in an "unlocked" position, i.e. out of the space of the rolled edge 10 ; preferably, these legs 5 extend in the plan or substantially in the plan of the central panel 14 of the lid 4.

Then, the locking legs 5 are operated in rotation around their one piece hinge 18, that in a direction causing their bringing closer to the side wall 6 of associated container 2 (this movement corresponds to the direction of arrow 30 of figure 1).
This rotational movement of the locking legs 5, in view of locking, can be implemented manually ; but in an alternative way, this operation can easily be mechanized.

During this locking operation, the locking body 19 of the leg 5 comes automatically in position by clipsage under the complementary locking structure 13 of the rolled edge 10 of container 2 (figure 2).
Its is thus obtained, simultaneously, the locking of lid 4 on container 2, and the sealing of this container 2 by the crushing of the seal 16 between the upper edge 11 of the container body 3 and the peripheral border 15 of lid 4.

In this locked position, the leg 5 comes to locate substantially parallel to the lateral wall 6 of the container body 3 ; the edge of the projecting structure 25 comes next to this side wall 6 and the exterior border 27 of the end part 20b is at distance of said wall 6 to delimit the gripping opening 28.

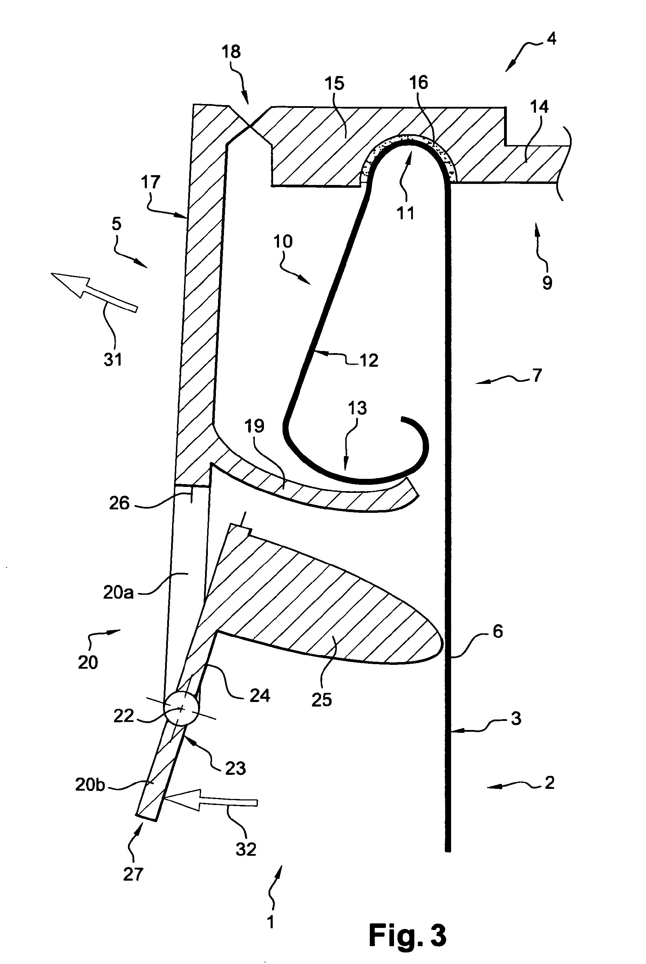

Then, when a final user needs to reach the content of the sealed packaging 1, he just needs to operate the locking legs 5 in unlocked position, i.e. in the direction of arrow 31 of figure 3 (in opposite direction compared to the locking operation, corresponding to arrow 30 of figure 1).

For this purpose, the final user introduces one or some fingers through lower opening 28 of the locking leg 5, so as to arrange them under the end part 20b. Then, the final user pushes or pulls on this end part 20b (eventually simultaneously pushing the one piece lengthening 24 towards the container side wall 6), that in a suitable manner to cause its swivelling around the hinge 22 and compared to the principal part 20a, in direction symbolized by arrow 32 of figure 3.
During this operation, the end part 20b forms a kind of lever facilitating the rotation of the locking leg 5 around its one piece hinge 18, that by the resting of its projecting structure 25 on the external face on the side wall 6 of container 2 in opposite.
During this operation, the final user breaks, in an irreversible way, the one piece joining point 26 (because of the spacing between the principal part 20a and the extension 24 of the leg, and because of the weakness of said joining point 26), thus constituting the witness of opening or tamper evidence closure of the locking leg 5.

Of course, the final user can then lock and unlock as many time as he wishes the lid 4 compared to container 2, by a manual and adapted operation of the locking legs 5.

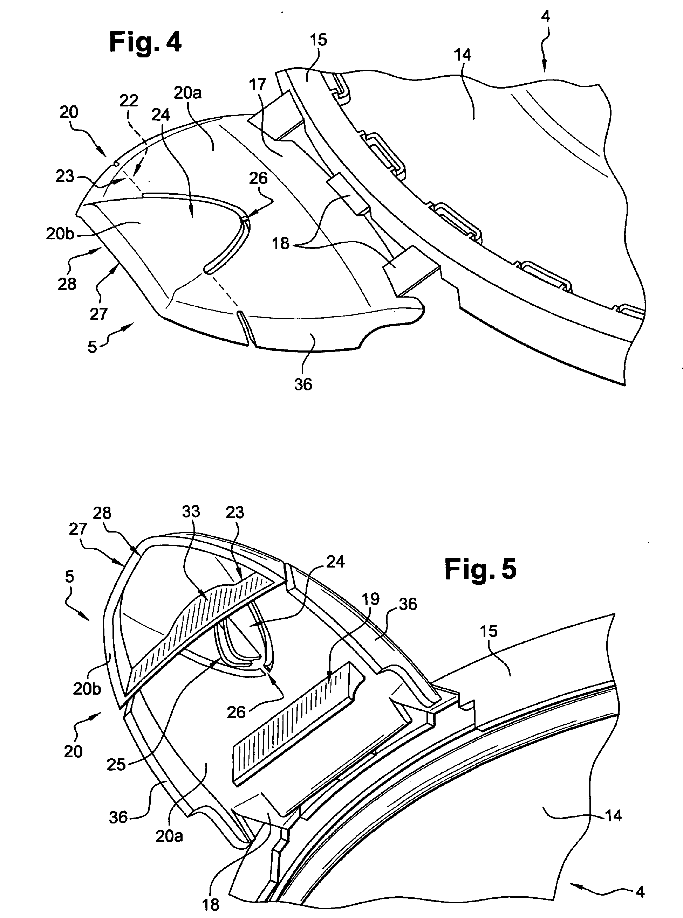

Figures 4 and 5 show a particularly interesting embodiment of the lid as described above in relation to figures 1 to 3.

On these figures, it can be seen a lid 4 comprising a central panel 14 delimited by a peripheral border 15 equipped with the locking legs 5 (one of these legs is visible on these figures) by the intermediary each one of a one piece hinge 18.
In the same way, the represented locking leg 5 comprises a body 17 provided with a gripping part 19, extending at the side of its lower face ; this body 17 is still provided with the one piece lengthening 20 forming operation handle.

It is also here found the two parts of the lengthening 20, namely a principal part 20a, on the side of the gripping part 19, associated with an end part 20b via a thinned matter line 22 suitable to form a hinge ; this folding line 22 extends transversely, and also in parallel or substantially in parallel to the hinge 18 of the locking leg 5.

The end part 20b comprises an interior edge 23, at the side of the hinge 22, from which the one piece extension 24 extends, that in the space of the principal part 20a and on a portion of its length ; this extension 24 is provided on its lower face with the projecting structure 25, and it is joined with the principal part 20a by a one piece joining point 26.
The free external edge 27 of lengthening 20 is shaped to define a lower opening 28 adapted for the passage of the fingers of the final user, and the gripping of said end part 20b.

On figure 5, it is still noticed that the end part 20b comprises a transversal wall 33, extending on the side of its rear face, next to the interior edge 23. This transversal wall 33 constitutes a stop panel suitable to allow adapted positioning of the user fingers only under the end part 20b associated. It avoids particularly the positioning of the fingers under the extension 24 or under the principal part 20a, which would limit the efficiency of the unlocking operation. Moreover, that would prevent to use a tool to unlock the leg.

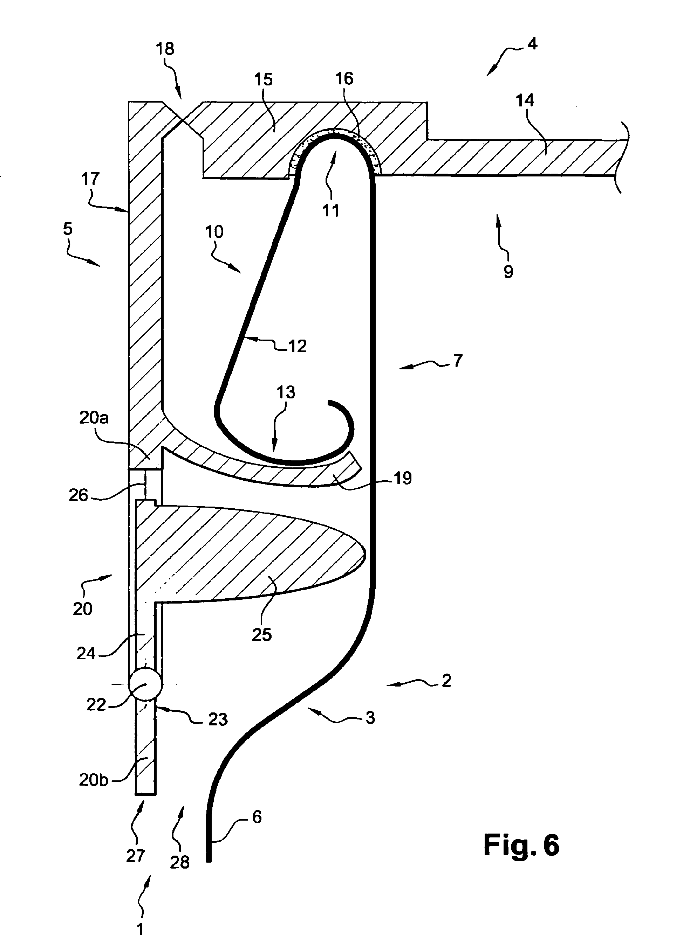

Figures 6, 7 and 8 each show a possible alternative embodiment of packaging in conformity with the invention.

On figure 6, container 2 differs from the one described above in relation to figures 1 to 3, only because of the interior shift or unwedging of the upper border 7 compared to the general width of the side wall 6.
Such a structure of container 2 is obtained by swaging of its upper border 7, before rolling of the upper edge 10, or in an alternative way, by expansion of its side wall 6. Moreover, such a shape of the container body can be used particularly with all the embodiments here described.

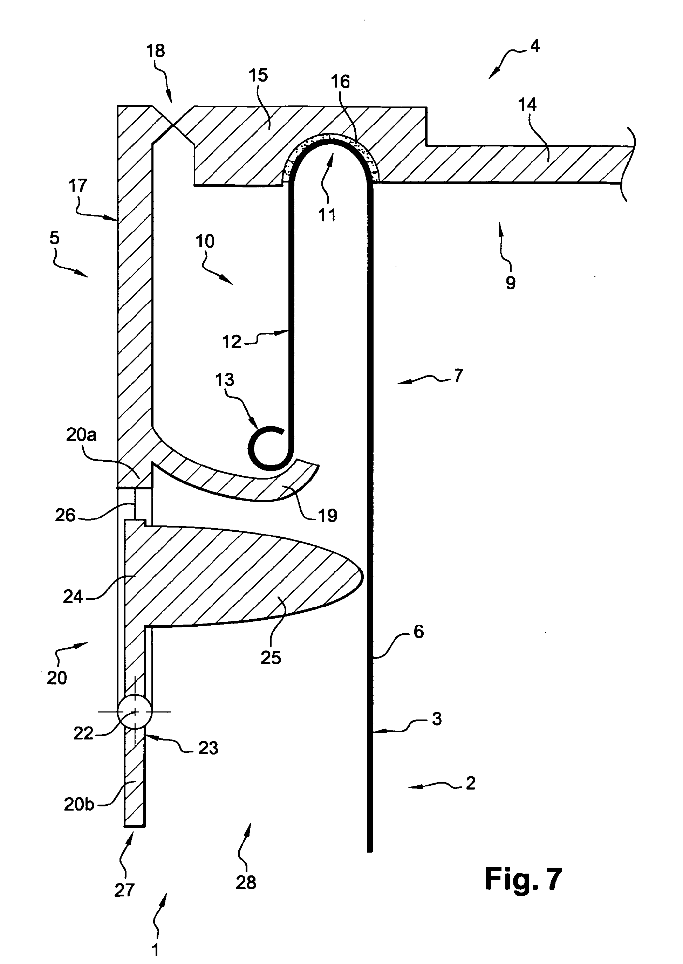

On figure 7, container 2 distinguishes from the one described here-above in relation to figures 1 to 3, in that it comprises an upper rolled edge 10 comprising successively, from the upper border 7 of the side wall 6 associated, the following parts:
- an upper rolled part 11 shaped in general U reversed section, opened in direction of the lower edge of the associated side wall 6,
- a connection part 12, extending here in parallel and at distance from the side wall 6 in opposite, and
- a lower rolled part 13 in general shape of half-circle or half-oval (in form of a buckle), extending away from the side wall 6.

As described above, the lower rolled part 13 of the rolled edge 10 constitutes the complementary locking structure suitable to cooperate with the locking legs 5 of the closing lid 4.

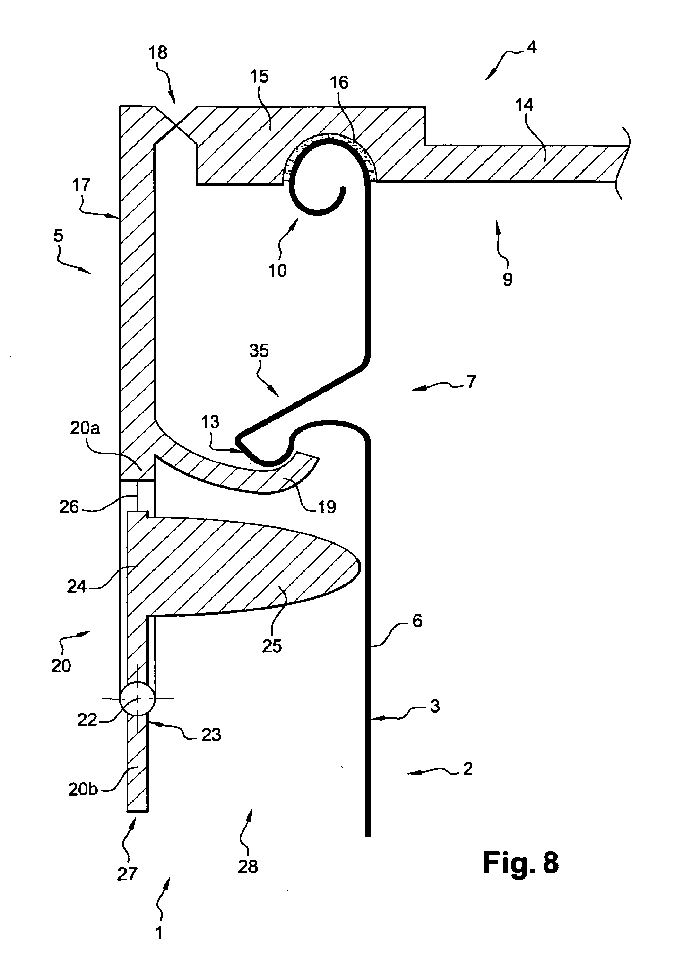

On figure 8, the side wall 6 of container 2 comprises an upper rolled edge 10 in general buckle shape, whereof the upper part receives directly the peripheral border 15 of lid 4.
This side wall 6 is also provided with an external moulding 35, continuous or discontinuous, for example obtained by a drawing operation, of which the lower curved part is formed to constitute the complementary locking structure 13 cooperating by clipsage with the legs 5 of lid 4 operated in locked position.

Of course, in the case of packagings corresponding to figures 6 to 8 described above, the locking part 19 of legs 5 is shaped to suitably come by clipsage under the locking structure complementary 13 associated.

In all cases, locking legs 5 are shaped to make relatively difficult their unlocking without breaking the tamper evidence closing 26.
For this purpose, the length of lengthenings 20 will be reduced to the maximum in order to limit the possibilities to use the corresponding lever. Moreover, as showed on the embodiment of the figures 4 and 5, the lateral borders of the locking legs 5 can be equipped with returns 36 whereof free longitudinal edge, intended to come next to the outside face of the side wall 6, fits said side wall 6 in opposite, in order to limit the possibility of inserting a swinging tool.

In the same spirit, even if the figures 1 to 8 show some technical solutions in which locking seats 13 are made out in a continuous manner on the whole periphery of container 2, some alternative embodiments can have seat 13 of discontinuous sections, provided and arranged only on the zones of location of the legs 5.

The packaging in conformity with the invention can be provided with one or several locking legs, associated with one or several structure playing a role of a simple hinge.

## Claims

1. Packaging comprising a container (2) associated with a lid (4) equipped with reversible and reusable locking means,
**characterised in that** said container (2) comprises a metallic body (3), obtained particularly either by stamping or by cutting, welding and rolling operations of a metallic sheet, provided with a side wall (6) whereof lower border is associated with a bottom and whereof upper border (7), which delimits an upper opening (9) of said container (2), is finished by an upper edge (10),
and **in that** said lid (4), made out of plastic material, comprises a central closing panel (14) prolonged by a peripheral border (15) suitable to cap said upper edge (10) of body container (3) during the closing of said container (2) by the lid (4), said lid (4) comprising also, on its periphery, at least two locking legs (5) each connected to said peripheral border (15) via a one piece hinge (18) whereof the articulation axis extends parallel or substantially parallel to said peripheral border (15),
**in that** each said locking legs (5) comprises at least a locking part (19) suitable to cooperate in a removable way with an outer structure (13, 36), called "complementary locking structure", arranged at the side of the upper border (7) of said body container (3), when said locking leg (5) is swivelled in a "locked" position,
and **in that** some at least of the locking legs (5) comprise a one piece lengthening (20) forming a kind of handle facilitating, for an user, the swivelling operation of said locking legs (5), wherein said one piece lengthening (20) comprises a principal part (20a), located at the side of the locking part (19), continued by an end part (20b) by the intermediary of a one piece folding line (22),
**in that** said end part (20b) comprises, on the one hand, an opening (28) shaped to allow the passage of the fingers of an user and its gripping, in particular to allow its swivelling compared to said principal part (20a), and on the other hand, a one piece extension (24) extending in direction of the peripheral border (15) of the lid (4), suitable to come resting on the outside face in opposite of the side wall (6) of the container (2) during the swivelling operation of said end part (20b), that particularly to form a kind of lever and so as to facilitate the swivelling of the locking leg (5) from its locked position up to an unlocked position.

2. Packaging according to claim 1, wherein, before its first opening, the principal part (20a) and the extension (24) forming lever of the end part (20b) of the locking legs lengthening (20) are also bound together via connections means (26) which are degradable in an irreversible way, for example of the pre-cut line(s) type or of the junction point(s) type, suitable to be broken during the swivelling operation of said end part (20b) compared to said principal part (20a), that to constitute witness of opening or tamper evident closure.

3. Packaging according to any of the claims 1 or 2, wherein the one piece extension (24) comprises, at the side of its lower face, a projecting structure (25) suitable to reinforce this extension and to constitute the leaning part for the unlocking operation.

4. Packaging according to any of the claims 1 to 3, wherein the folding line (22) extends transversely over the width of the one piece lengthening (20) of the locking legs (5), and wherein the end part (20b) of said lengthening (20) comprises:
- the opening (28) for the passage of the fingers, arranged at the side of the free external edge (27) of said one piece lengthening (20), opposed to the articulation hinge (18) of said locking leg (5), and
- an extension (24) forming lever, extending in the space of the principal part (20a), on a portion of its length and in direction of said articulation hinge (18) of the corresponding locking leg (5).

5. Packaging according to claim 4, wherein the end part (20b) of said lengthening (20) comprises a transversal wall (33), arranged to form a stop aiming at limiting the possibility of introduction of the fingers into the opening (28).

6. Packaging according to any of the claims 4 or 5, wherein the lateral borders of the locking legs (5) is equipped with returns (36) whereof the free longitudinal edge, intended to come next to the outside face of the side wall (6), fits said side wall (6) in opposite, in order to limit the possibility of inserting a swinging tool.

7. Packaging according to any of the claims 4 to 6, wherein the folding line (22) extends in parallel or substantially in parallel compared to the upper hinge (18).

8. Packaging according to any of the claims 1 to 7, wherein the peripheral border (15) of the lid central closing panel (14) comprises a U reversed section, whereof the bottom is equipped with a seal (16), and wherein the locking part (19) of the locking legs (5) are suitable to cooperate in a removable way with the complementary locking structure (13, 36) during a swivelling operation of said locking leg (5) in a "locked" position, the corresponding cooperation involving, simultaneously, a bringing nearer between said peripheral border (15) of lid (4) and said upper edge (10) of container (2), to obtain the crushing of said seal (16).

9. Packaging according to claim 8, wherein the upper face of the locking part (19) of locking leg (5) and the lower face of the complementary locking structure (13) of container (2) have complementary or substantially complementary surfaces in curved general shape, suitable to cooperate one with the other during the swivelling operation of the locking legs (5) in locked position.

10. Packaging according to any of the claims 8 or 9, wherein the upper edge (10) of the container (2) consists in a roll, projecting towards outside, the complementary locking structure of container (2) being formed by the lower part (13) of said rolled edge (10).

11. Packaging according to claim 10, wherein the rolled edge (10) comprises, successively, from the upper border (7) of the associated side wall (6), at least the following parts :
- an upper part (11) in shape of a roll having a general U section, open towards the lower border of the associated side wall (6), suitable to be capped by the peripheral border (15) of the lid (4), and
- a lower part (13) in shape of a roll whereof lower surface presents a section arranged in the general shape of half-circle or half-oval, forming the complementary locking structure and suitable to cooperate with the upper face of the locking part (19) of the lid (4).

12. Packaging according to any of the claims 8 or 9, wherein the side wall (6) of the body of container (3) comprises, at the side of its upper border (7), a moulding (35) projecting towards the outside and whereof the lower part (13) is shaped to constitute the complementary locking structure of the container (2), suitable to cooperate with the locking part (19) of the lid (4).

13. Lid (4) equipped with reversible and reusable locking means, wherein said lid (4), made out of plastic material, comprises a central closing panel (14) prolonged by a peripheral border (15) suitable to cap the upper edge (10) of a body container (3) during the closing of said container (2) by the lid (4), said lid (4) comprising also, on its periphery, at least two locking legs (5) each connected to said peripheral border (15) via a one piece hinge (18) whereof the articulation axis extends parallel or substantially parallel to said peripheral border (15),
in that each said locking legs (5) comprises at least a locking part (19) suitable to cooperate in a removable way with an outer structure (13, 36), called "complementary locking structure", arranged at the side of the upper border (7) of said body container (3), when said locking leg (5) is swivelled in a "locked" position,
and in that some at least of the locking legs (5) comprise a one piece lengthening (20) forming a kind of handle facilitating, for an user, the swivelling operation of said locking legs (5), wherein said one piece lengthening (20) comprises a principal part (20a), located at the side of the locking part (19), continued by an end part (20b) by the intermediary of a one piece folding line (22),
in that said end part (20b) comprises, on the one hand, an opening (28) shaped to allow the passage of the fingers of an user and its gripping, in particular to allow its swivelling compared to said principal part (20a), and on the other hand, a one piece extension (24) extending in direction of the peripheral border (15) of the lid (4), suitable to come resting on the outside face in opposite of the side wall (6) of the container (2) during the swivelling operation of said end part (20b), that particularly to form a kind of lever and so as to facilitate the swivelling of the locking leg (5) from its locked position up to an unlocked position.

## Patentansprüche

1. Verpackung, die einen Behälter (2) aufweist, der mit einem Deckel (4) verbunden ist, der mit reversiblen und wiederverwendbaren Verriegelungsmitteln versehen ist,
**dadurch gekennzeichnet, dass** der Behälter (2) einen metallischen Körper (3) aufweist, der insbesondere entweder durch Stanzen oder durch Schneiden, Schweiß- und Walzvorgänge eines Blechs erzielt wird, der mit einer Seitenwand (6) versehen ist, deren unterer Rand zu einem Boden gehört, und deren oberer Rand (7), der eine obere Öffnung (9) des Behälters (2) abgrenzt, mit einer oberen Kante (10) fertiggestellt ist,
und dass der Deckel (4), der aus Kunststoff besteht, eine zentrale Verschlussplatte (14) aufweist, die durch einen Umfangsrand (15) verlängert ist, der auf der oberen Kante (10) des Behälterkörpers (3) während des Schließens des Behälters (2) durch den Deckel (4) sitzen kann, wobei der Deckel (4) ferner auf seinem Umfang mindestens zwei Verriegelungsbeine (5) aufweist, die jeweils mit dem Umfangsrand (15) über ein einteiliges Scharnier (18), dessen Gelenkachse sich parallel oder im Wesentlichen parallel zu dem Umfangsrand (15) erstreckt, verbunden sind,
dass jedes Verriegelungsbein (5) mindestens einen Verriegelungsteil (19) aufweist, der abnehmbar mit einer Außenstruktur (13, 36), die "komplementäre Verriegelungsstruktur" genannt wird, die an der Seite des oberen Rands (7) des Behälterkörpers (3) eingerichtet ist, während eines Schwenkvorgangs des Verriegelungsbeins (5) in eine "verriegelte" Position zusammenwirken kann,
und dass mindestens einige der Verriegelungsbeine (5) eine einteilige Verlängerung (20) aufweisen, die eine Art Griff bildet, die einem Benutzer den Schwenkvorgang der Verriegelungsbeine (5) erleichtert, wobei die einteilige Verlängerung (20) einen Hauptteil (20a) aufweist, der sich an der Seite des Verriegelungsteils (19) befindet, verlängert durch einen Endteil (20b) über eine einteilige Faltlinie (22),
wobei der Endteil (20b) einerseits eine Öffnung (28) aufweist, die geformt ist, um das Durchgehen der Finger eines Benutzers und sein Erfassen zu erlauben, insbesondere sein Schwenken in Bezug zu dem Hauptteil (20a) zu erlauben, und andererseits eine einteilige Erweiterung (24), die sich in Richtung des Umfangsrands (15) des Deckels (4) erstreckt, die auf der Außenseite entgegen gesetzt zu der Seitenwand (6) des Behälters (2) während des Schwenkvorgangs des Endteils (20b) zum Aufliegen kommen kann, um insbesondere eine Art Hebel zu bilden und um das Schwenken des Verriegelungsbeins (5) von seiner verriegelten Stellung nach oben zu seiner entriegelten Stellung zu erleichtern.

2. Verpackung nach Anspruch 1, wobei der Hauptteil (20a) und die Erweiterung (24), die den Hebel des Endteils (20b) der Verriegelungsbeinverlängerung (20) bilden, vor dem ersten Öffnen auch über Verbindungsmittel (26) zusammengehalten werden, die unwiderruflich zerstörbar sind, zum Beispiel des Typs vorgeschnittene Linie(n) oder des Typs Verbindungspunkt(e), die bei dem Schwenkvorgang des Endteils (20b) in Bezug zu dem Hauptteil (20a) gebrochen werden können, um einen Nachweis des Öffnens oder einen den unbefugten Eingriff anzeigenden Verschluss zu bilden.

3. Verpackung nach Anspruch 1 oder 2, wobei die einteilige Erweiterung (24) an der Seite ihrer unteren Seite eine vorstehende Struktur (25) aufweist, die diese Erweiterung verstärken und den Anlehnteil für den Entriegelungsvorgang bilden kann.

4. Verpackung nach einem der Ansprüche 1 bis 3, wobei sich die Faltlinie (22) quer über die Breite der einteiligen Verlängerung (20) der Verriegelungsbeine (5) erstreckt, und wobei der Endteil (20b) der Verlängerung (20) Folgendes aufweist:
- die Öffnung (28) für das Durchgehen der Finger, eingerichtet an der Seite der freien Außenkante (27) des einteiligen Verlängerungsteils (20), dem Anlenkscharnier (18) des Verriegelungsbeins (5) entgegengesetzt, und
- eine einen Hebel bildende Erweiterung (24), die sich in dem Raum des Hauptteils (20a) auf einem Abschnitt seiner Länge und in Richtung des Anlenkscharniers (18) des entsprechenden Verriegelungsbeins (5) erstreckt.

5. Verpackung nach Anspruch 4, wobei der Endteil (20b) der Verlängerung (20) eine Querwand (33) aufweist, die eingerichtet ist, um einen Anschlag zu bilden, der die Möglichkeit des Einführens der Finger in die Öffnung (28) einschränken soll.

6. Verpackung nach einem der Ansprüche 4 oder 5, wobei die Seitenwände der Verriegelungsbeine (5) mit Rücksprüngen (36) ausgestattet sind, deren freie Längskante, die dazu bestimmt ist, neben die Außenseite der Seitenwand (6) zu kommen, zu der gegenüberliegenden Seitenwand (6) passt, um die Möglichkeit des Einfügens eines Schwingwerkzeugs einzuschränken.

7. Verpackung nach einem der Ansprüche 4 bis 6, wobei sich die Faltlinie (22) parallel oder im Wesentlichen parallel zu dem oberen Scharnier (18) erstreckt.

8. Verpackung nach einem der Ansprüche 1 bis 7, wobei der Umfangsrand (15) der zentralen Verschlussplatte (14) einen umgekehrten U-Abschnitt aufweist dessen Boden mit einer Dichtung (16) versehen ist, und wobei der Verriegelungsteil (19) der Verriegelungsbeine (5) in abnehmbarer Art mit der komplementären Verriegelungsstruktur (13, 36) während eines Schwenkvorgangs des Verriegelungsbeins (5) in eine "verriegelte" Position zusammenwirken kann, wobei die entsprechende Zusammenarbeit gleichzeitig ein Näherbringen zwischen dem Umfangsrand (15) des Deckels (4) und der oberen Kante (10) des Behälters (2) umfasst, um das Zusammendrücken der Dichtung (16) zu erzielen.

9. Verpackung nach Anspruch 8, wobei die obere Seite des Verriegelungsteils (19) des Verriegelungsbeins (5) und die untere Seite der komplementären Verriegelungsstruktur (13) des Behälters (2) komplementäre oder im Wesentlichen komplementäre Flächen in allgemein gebogener Form haben, die miteinander während des Vorgangs des Schwenkens der Verriegelungsbeine (5) in die verriegelte Position zusammenwirken können.

10. Verpackung nach Anspruch 8 oder 9, wobei die obere Kante (10) des Behälters (2) aus einer Rolle, die nach außen vorsteht, besteht, wobei die komplementäre Verriegelungsstruktur des Behälters (2) von dem unteren Teil (13) der gerollten Kante (10) gebildet wird.

11. Verpackung nach Anspruch 10, wobei die gerollte Kante (10) nacheinander von dem oberen Rand (7) der dazugehörenden Seitenwand (6) mindestens die folgenden Teile aufweist:
- einen oberen Teil (11) in Form einer Rolle mit allgemeinem U-Querschnitt, zu der unteren Kante der dazugehörenden Seitenwand (6) offen, auf dem die Umfangskante (15) des Deckels (4) sitzen kann, und
- einen unteren Teil (13) in Form einer Rolle, deren untere Fläche einen Querschnitt aufweist, der in der allgemeinen Form eines Halbkreises oder Halbovals gestaltet ist und die komplementäre Verriegelungsstruktur bildet und mit der oberen Seite des Verriegelungsteils (19) des Deckels (4) zusammenwirken kann.

12. Verpackung nach einem der Ansprüche 8 oder 9, wobei die Seitenwand (6) des Behälterkörpers (3) an der Seite ihres oberen Rands (7) einen Formteil (35) aufweist, der sich zur Außenseite erstreckt und dessen unterer Teil (13) geformt ist, um die komplementäre Verriegelungsstruktur des Behälters (2) zu bilden, die mit dem Verriegelungsteil (19) des Deckels (4) zusammenwirken kann.

13. Deckel (4) mit umkehrbaren und wiederverwendbaren Verriegelungsmitteln, wobei der Deckel (4), der aus Plastikmaterial besteht, eine zentrale Verschlussplatte (14) aufweist, die durch einen Umfangsrand (15) verlängert wird, der während des Schließens des Behälters (2) durch den Deckel (4) auf der oberen Kante (10) eines Behälterkörpers (3) sitzen kann, wobei der Deckel (4) auf seinem Umfang ferner mindestens zwei Verriegelungsbeine (5) aufweist, die mit dem Umfangsrand (15) über ein einteiliges Scharnier (18) verbunden sind, dessen Anlenkachse sich parallel oder im Wesentlichen parallel zu dem Umfangsrand (15) erstreckt,
wobei jedes Verriegelungsbein (5) mindestens einen Verriegelungsteil (19) aufweist, der abnehmbar mit einer äußeren Struktur (13, 36), "komplementäre Verriegelungsstruktur" genannt, zusammenwirken kann, die an der Seite des oberen Rands (7) des Behälterkörpers (3) eingerichtet ist, wenn das Verriegelungsbein (5) in eine "verriegelte" Position geschwenkt wird,
und wobei zumindest bestimmte der Verriegelungsbeine (5) eine einteilige Verlängerung (20) aufweisen, die eine Art Griff bildet, die einem Benutzer den Schwenkvorgang der Verriegelungsbeine (5) erleichtert, wenn die einteilige Verlängerung (20) einen Hauptteil (20a) aufweist, der sich an der Seite des Verriegelungsteils (19) befindet, verlängert durch einen Endteil (20b) über eine einteilige Faltlinie (22),
wobei der Endteil (20b) einerseits eine Öffnung (28) aufweist, die geformt ist, um das Durchgehen der Finger eines Benutzers und sein Erfassen zu erlauben, insbesondere sein Schwenken zu dem Hauptteil (20a) zu erlauben, und andererseits eine einteilige Erweiterung (24), die sich in Richtung des Umfangsrands (15) des Deckels (4) erstreckt und auf der Außenseite gegenüber der Seitenwand (6) des Behälters (2) während des Schwenkvorgangs des Endteils (20b) zum Aufliegen kommen kann, um insbesondere eine Art Hebel zu bilden und um das Schwenken des Verriegelungsbeins (5) von seiner verriegelten Stellung nach oben zu einer entriegelten Stellung zu erleichtern.

## Revendications

1. Emballage comprenant un récipient (2) associé à un couvercle (4) équipé de moyens de verrouillage réversibles et réutilisables,
**caractérisé en ce que** ledit récipient (2) comprend un corps métallique (3), obtenu en particulier soit par emboutissage, soit par des opérations de découpage, soudage et roulage d'une feuille de métal, pourvu d'une paroi latérale (6) dont le bord inférieur est associé à un fond et dont le bord supérieur (7), qui délimite l'ouverture de dessus (9) dudit récipient (2), est terminé par un rebord supérieur (10),
et **en ce que** ledit couvercle (4), constitué d'un matériau plastique, comprend un panneau de fermeture central (14) prolongé par un bord périphérique (15) adapté pour recouvrir ledit rebord supérieur (10) dudit corps de récipient (3) pendant de la fermeture dudit récipient (2) par le couvercle (4), ledit couvercle (4) comprenant également, à sa périphérie, au moins deux pattes de verrouillage (5) qui sont chacune raccordées audit bord périphérique (15) par l'intermédiaire d'une charnière monobloc (18) dont l'axe d'articulation s'étend parallèlement ou essentiellement parallèlement audit bord périphérique (15),
**en ce que** chacune desdites pattes de verrouillage (5) comprenant au moins une partie de verrouillage (19) adaptée pour coopérer d'une manière dégageable avec une structure extérieure (13, 36), appelée "structure de verrouillage complémentaire", disposée du côté du bord supérieur (7) dudit corps de récipient (3), pendant une opération de pivotement de ladite patte de verrouillage (5) vers une position "fermée",
et **en ce que** certaines au moins des pattes de verrouillage (5) comprennent un prolongement monobloc (20) formant une sorte de poignée facilitant, pour un utilisateur, l'opération de pivotement desdites pattes de verrouillage (5), lequel le prolongement monobloc (20) comprend une partie principale (20a), située du côté de la partie de verrouillage (19), prolongée par une partie d'extrémité (20b), par l'intermédiaire d'une ligne de pliage d'un seul tenant (22),
**en ce que** ladite partie d'extrémité (20b) comprend, d'une part, une ouverture (28) conformée de façon à permettre le passage des doigts d'un utilisateur et sa préhension, en particulier pour permettre son pivotement par rapport à la partie principale (20a), et d'autre part, une extension d'un seul tenant (24) s'étendant en direction du bord périphérique (15) du couvercle (4), adaptée pour venir reposer sur la face extérieure en regard de la paroi latérale (6) du récipient (2) pendant l'opération de pivotement de ladite partie d'extrémité (20b), ceci en particulier pour former une sorte de levier, afin de faciliter le pivotement de la patte de verrouillage (5) de sa position verrouillée à sa position non déverrouillée.

2. Emballage selon la revendication 1, dans lequel, avant sa première ouverture, la partie principale (20a) et l'extension (24) formant levier de la partie d'extrémité (20b) du prolongement de pattes de verrouillage (20) sont également attachées l'une à l'autre par des moyens de liaison (26) qui sont dégradables d'une manière irréversible, par exemple, du type ligne(s) prédécoupée(s) ou du type point(s) de raccordement, adaptés pour être cassés lors de l'opération de pivotement de ladite partie d'extrémité (20b) par rapport à ladite partie principale (20a), ceci pour constituer un témoin d'ouverture.

3. Emballage selon la revendication 1 ou 2, dans lequel l'extension monobloc (24) comprend, du côté de sa face de dessous, une structure saillante (25) adaptée pour renforcer cette extension et pour constituer la partie d'appui pour l'opération de déverrouillage.

4. Emballage selon les revendications 1 à 3, dans lequel la ligne de pliage (22) s'étend transversalement sur toute la largeur du prolongement monobloc (20) des pattes de verrouillage (5), et dans lequel la partie d'extrémité (20b) dudit prolongement (20) comprend :
- l'ouverture (28) pour le passage des doigts, disposée du côté du bord extérieur libre (27) dudit prolongement monobloc (20), à l'opposé de la charnière d'articulation (18) de ladite patte de verrouillage (5), et
- une extension (24) formant levier, s'étendant dans l'espace de la partie principale (20a), sur une partie de sa longueur et en direction de ladite charnière d'articulation (18) de la patte de verrouillage (5) correspondante.

5. Emballage selon la revendication 4, dans lequel la partie d'extrémité (20b) dudit prolongement (20) comprend une paroi transversale (33), disposée de façon à former une butée visant à limiter la possibilité d'introduction des doigts dans ladite ouverture (28).

6. Emballage selon l'une quelconque des revendications 4 ou 5, dans lequel les bordures latérales des pattes de verrouillage (5) sont munies de retours (36) dont l'arête longitudinale libre, destinée à venir à proximité de la face extérieure de la paroi latérale (6), épouse ladite paroi latérale (6) en regard, de sorte à limiter les possibilités d'insertion d'un outil de manoeuvre.

7. Emballage selon l'une quelconque des revendications 4 à 6, dans lequel la ligne de pliage (22) s'étend parallèlement ou substantiellement parallèlement par rapport à la charnière supérieure (18).

8. Emballage selon l'une quelconque des revendications 1 à 7, dans lequel le bord périphérique (15) du panneau central de fermeture de couvercle (14) comprend une section en U inversé, dont le fond est équipé d'un joint (16), et dans lequel la partie de verrouillage (19) des pattes de verrouillage (5) sont adaptée pour coopérer d'une manière dégageable avec la structure de verrouillage complémentaire (13, 36), pendant une opération de pivotement de ladite patte de verrouillage (5) vers une position "fermée", la coopération correspondante mettant en jeu, simultanément, un rapprochement entre ledit bord périphérique (15) du couvercle (4) et ledit rebord supérieur (10) du récipient (2), pour obtenir l'écrasement dudit joint (16).

9. Emballage selon la revendication 8, dans lequel la face de dessus de la partie de verrouillage (19) de la patte de verrouillage (5) et la face de dessous de la structure de verrouillage complémentaire (13) du récipient (2) ont des surfaces complémentaires ou essentiellement complémentaires de forme généralement courbe, adaptées pour coopérer entre elles pendant l'opération de pivotement des pattes de verrouillage (5) en position fermée.

10. Emballage selon les revendications 8 ou 9, dans lequel le rebord supérieur (10) du récipient (2) consiste en un roulé, saillant vers l'extérieur, la structure de verrouillage complémentaire du récipient (2) étant formée par la partie inférieure (13) dudit rebord roulé (10).

11. Emballage selon la revendication 10, dans lequel le rebord roulé (10) comprend, successivement, à partir du bord supérieur (7) de la paroi latérale associée (6), au moins les parties suivantes :
- une partie supérieure (11) sous la forme d'un roulé ayant une section généralement en U, ouverte vers le bord inférieur de la paroi latérale associée (6), adaptée pour être recouverte par le bord périphérique (15) du couvercle (4), et
- une partie inférieure (13) sous la forme d'un roulé dont la surface de dessous présente une section ayant la forme générale d'un demi-cercle ou d'un demi-ovale, formant la structure de verrouillage complémentaire et adaptée pour coopérer avec la face de dessus de la partie de verrouillage (19) du couvercle (4).

12. Emballage selon la revendication 8 ou 9, dans lequel la paroi latérale (6) du corps de récipient (3) comprend, du côté de son bord supérieur (7), un moulage (35) saillant vers l'extérieur et dont la partie inférieure (13) est conformée de façon à constituer la structure de verrouillage complémentaire du récipient (2), adaptée pour coopérer avec la partie de verrouillage (19) du couvercle (4).

13. Couvercle (4) équipé de moyens de verrouillage réversibles et réutilisables, dans lequel ledit couvercle (4), constitué d'un matériau plastique, comprend un panneau de fermeture central (14) prolongé par un bord périphérique (15) adapté pour recouvrir le rebord supérieur (10) d'un corps de récipient (3) pendant de la fermeture dudit récipient (2) par le couvercle (4), ledit couvercle (4) comprenant également, à sa périphérie, au moins deux pattes de verrouillage (5) qui sont chacune raccordées audit bord périphérique (15) par l'intermédiaire d'une charnière monobloc (18) dont l'axe d'articulation s'étend parallèlement ou essentiellement parallèlement audit bord périphérique (15),
en ce que chacune desdites pattes de verrouillage (5) comprenant au moins une partie de verrouillage (19) adaptée pour coopérer d'une manière dégageable avec une structure extérieure (13, 36), appelée "structure de verrouillage complémentaire", disposée du côté du bord supérieur (7) dudit corps de récipient (3), pendant une opération de pivotement de ladite patte de verrouillage (5) vers une position "fermée",
et en ce que certaines au moins des pattes de verrouillage (5) comprennent un prolongement monobloc (20) formant une sorte de poignée facilitant, pour un utilisateur, l'opération de pivotement desdites pattes de verrouillage (5), lequel le prolongement monobloc (20) comprend une partie principale (20a), située du côté de la partie de verrouillage (19), prolongée par une partie d'extrémité (20b), par l'intermédiaire d'une ligne de pliage d'un seul tenant (22),
en ce que ladite partie d'extrémité (20b) comprend, d'une part, une ouverture (28) conformée de façon à permettre le passage des doigts d'un utilisateur et sa préhension, en particulier pour permettre son pivotement par rapport à la partie principale (20a), et d'autre part, une extension d'un seul tenant (24) s'étendant en direction du bord périphérique (15) du couvercle (4), adaptée pour venir reposer sur la face extérieure en regard de la paroi latérale (6) du récipient (2) pendant l'opération de pivotement de ladite partie d'extrémité (20b), ceci en particulier pour former une sorte de levier et afin de faciliter le pivotement de la patte de verrouillage (5) de sa position verrouillée à sa position non déverrouillée.
